# EUROPÄISCHE PATENTSCHRIFT

(11) **EP 2 165 789 B1**
(45) Veröffentlichungstag und Bekanntmachung des Hinweises auf die Patenterteilung: **07.01.2015**
(21) Anmeldenummer: 09009594.4
(22) Anmeldetag: 24.07.2009
(51) Int. Cl.: B22D 17/24, B29C 33/48

(54) **Verfahren zur Herstellung eines Kolbens einer Brennkraftmaschine mit einem mehrteiligen Kernschieber**
Method for producing a piston of a combustion engine with a multi-section core push device
Procédé de fabrication d'un piston d'un moteur à combustion interne doté d'une coulisse de noyaux en plusieurs parties

(30) Priorität: 23.09.2008 DE 102008048497
(43) Veröffentlichungstag der Anmeldung: 24.03.2010
(73) Patentinhaber: KS Kolbenschmidt GmbH, 74172 Neckarsulm (DE)
(72) Erfinder: Blau, Alfred Alexander, 74172 Neckarsulm (DE); Buschbeck, Ralf, 74861 Neudenau (DE)
(74) Vertreter: Greif, Thomas

(56) Entgegenhaltungen:
- DE-A1- 3 142 047
- DE-A1- 3 318 182
- DE-A1- 19 922 809
- GB-A- 348 394
- GB-A- 604 200
- GB-A- 746 471
- JP-A- 61 001 446

## Beschreibung

Die Erfindung betrifft ein Verfahren zur Herstellung eines Kolbens einer Brennkraftmaschine, wobei ein Kolbenrohling dadurch hergestellt wird, dass eine Gießschmelze in eine Gießform gegeben und abgewartet wird, bis die Gießschmelze erstarrt ist, wobei danach der Kolbenrohling der Gießform entnommen und fertig bearbeitet wird, wobei weiterhin die Gießform zumindest die äußeren Konturen des Kolbens abbildenden Gießformteile und einen den Innenbereich des Kolbens abbildenden Gießkern aufweist, gemäß den Merkmalen des Oberbegriffes des Patentanspruches 1.

Gießformen, die äußere Gießformteile, insbesondere zwei Gießformhälften, sowie einen Gießkern zur Bildung des Innenbereiches des Kolbens aufweisen, sind für die Herstellung von Kolben für Brennkraftmaschinen in Gießverfahren schon seit langem Stand der Technik. Darüber hinaus weisen die Gießformteile solche Konturen (Negativkonturen) auf, die beim fertigen Kolben die Nabenbereiche, die Bolzenbohrung, die Kolbenschäfte, gegebenenfalls vorhandene Brennraummulden und dergleichen bilden. Gießformen wie zuvor beschrieben, sind beispielsweise aus der GB 746 471 bekannt.

Zur Herstellung von Freigüssen (auch Freibereiche genannt oder Hohlräume) ist es schon bekannt geworden, innerhalb der Gießform ausspülbare Kerne, insbesondere Sand- oder Salzkerne, vor dem Eingießen der Gießschmelze zu positionieren, wobei nach dem Erstarren der Gießschmelze diese Kerne ausgespült werden und sich somit ein Freiguss (der nach zumindest einer Seite offen ist) oder ein Hohlraum (der weitestgehend geschlossen ist, wie z.B. ein Kühlkanal eines Kolbens) ergibt. Derartige lösbare Formkörper sind beispielsweise aus der DE 101 42 980 A1 bekannt.

Die DE 199 22 809 A1 offenbart ein Gießverfahren zur Herstellung eines Kastenkolbens mit Aussparungen zwischen Nabenabstützung und Ringband zur Verminderung der Kolbenmasse. Hierzu werden zum Ausformen schwenkbare Gießkerne vorgeschlagen. Nachteilig ist der zu berücksichtigende Schwenkraum und der durch die Schwenkbewegung eingeschränkt realisierbare Hinterschnitt im Freiguss.

In der GB 348 394 A wird ein Kern für eine Gießform für einen Kolben beschrieben, bei dem die Bolzennaben gegenüber dem Kolben zurückgesetzt sind. Mit dem dort offenbarten Gießverfahren ist es jedoch nicht möglich Freigüsse mit Hinterschneidungen zu erzeugen.

Freigüsse, die zu einer Seite offen sind und beispielsweise ein rundes, ovales oder vergleichbares Profil im Querschnitt aufweisen, werden zur Gewichtserleichterung hergestellt und sind beispielsweise aus der DE 10 2005 041 001 A1 bekannt. Bei diesem bekannten Freiguss ist es aber auf Grund seiner geometrischen Erstreckung hinter dem Ringfeld des Kolbens erforderlich, dass er mit einem ausspülbaren Kern erzeugt wird. Würde man an Stelle eines ausspülbaren Kerns einen Schieber, der mehrfach verwendet wird und aus Stahl besteht, einsetzen, wäre es nach dem Erstarren der Gießschmelze nicht mehr möglich, diesen Schieber zu entfernen.

Auf der anderen Seite sind jedoch solche Freigüsse mit einem hinterschneidenden Querschnittsprofil sehr sinnvoll, da die Bereiche des Freigusses in solche Bereiche des Kolbens hineinreichen können, die während des Betriebes des Kolbens gar nicht oder wenig belastet sind, so dass an diesen Stellen kein Material vorhanden sein muss, so dass dieses zwecks Gewichtsreduzierung entfallen kann. Herausbewegung des zumindest weiteren Teiles des Schiebers aus dessen beim Gießen eingenommenen Position freigegeben wird. Die mehrteilige Ausgestaltung des Schiebers hat den Vorteil, dass auf Grund der äußeren Formgebung und der Zusammensetzung der beiden oder mehrerer Teilschieber sich die gewünschte Geometrie für den Freiguss abbilden lässt. Durch die Mehrteiligkeit der Schieber, die zusammengesetzt die späteren Konturen des Freigusses bilden, kann der Freiguss nach dem Erstarren der Gießschmelze dadurch realisiert werden, dass die mehreren Teile des Schiebers nacheinander entfernt werden, so dass sich dadurch ohne Weiteres eine negative Auszugsschräge und demzufolge Hinterschnitte im Kolbenmaterial erzielen lassen, die in solchen Bereichen liegen, die während des Betriebes des fertigen Kolbens im Zylinderraum der Brennkraftmaschine nicht oder nur schwach belastet sind, so dass in Folge des vergrößerten Freigusses die Festigkeitseigenschaften des Kolbens nicht beeinträchtigt werden. In vorteilhafter Weise wird somit in erfindungsgemäße Weise der Freiguss, insbesondere hinter dem Ringfeld (andere Bereiche des Kolbens sind auch denkbar) in Bolzenachsrichtung derart vergrößert, dass minimale Wandstärken zu den Ringnuten des Ringfeldes und maximale Breite in Kolbenbolzenachsenrichtung erzielt werden.

Zur Durchführung des Verfahrens werden die mehreren Teile des Schiebers gemeinsam oder auch nacheinander, gegebenenfalls in Gruppen, in ihre Soll-Position in die Gießform gefahren, danach die dann weitestgehend (bis auf den Zulauf für die Gießschmelze) geschlossene Gießform mit Gießschmelze aufgefüllt und abgewartet, bis die Gießschmelze vollständig erstarrt ist. Danach können die Teile der Gießform aus ihrer beim Gießen eingenommen Position herausgefahren werden, d.h., dass die Gießform geöffnet wird. Dabei sind die einzelnen Teile der Gießform, insbesondere die Gießformhälften, der Gießkern sowie die beteiligten Schieber so gestaltet, dass die mehreren Teile des Schiebers wieder nacheinander oder gegebenenfalls auch gruppenweise aus ihrer beim Gießen eingenommenen Position herausbewegt werden, so dass sich ein Freiguss mit Hinterschneidungen ergibt. Das Ein- bzw. Ausfahren der einzelnen Teile der Schieber kann in einem vollständigen Ein- bzw. Ausfahren bestehen, wobei es auch denkbar ist, dass ein Teil eines Schiebers zunächst teilweise in die Soll-Position bzw. aus dieser heraus bewegt wird, dann ein nächster Teilschieber in bzw. aus seiner Position hinein- bzw. herausbewegt wird und, insbesondere beim Vorhandensein von mehr als zwei Teilschiebern, dieser Vorgang solange wiederholt wird, bis alle Teilschieber ihre Soll-Position in der Gießform vor dem Einfüllen der Gießschmelze eingenommen haben bzw. alle Teilschieber nach dem Erstarren der Gießschmelze aus ihrer Soll-Position während des Gießvorganges herausbewegt worden sind, so dass der fertige Kolbenrohling der Gießform entnommen und weiter bearbeitet werden kann.

In besonders vorteilhafter Weise wird mit dem mehrteiligen Schieber ein radial abschnittsweiser Freiguss hinter dem Ringfeld, oberhalb einer Bolzenbohrung des Kolbens erzeugt. Dadurch können diejenigen Bereiche des Kolbens von Kolbenmaterial ausgespart und eine Gewichtsreduzierung erzielt werden, die nicht oder nur sehr wenig zur Festigkeit des Kolbens im Betrieb im Zylinderraum der Brennkraftmaschine beitragen.

In Weiterbildung der Erfindung sind durch die Ausgestaltung der Gießform, insbesondere der die äußeren Konturen bildenden Gießformteilen, die Bolzennaben gegenüber dem äußeren Durchmesser des Kolbens zurückgesetzt, wobei weiterhin ein kurzer Bolzen in die Bolzenbohrungen in den Bolzennaben eingesetzt wird. Der somit resultierende kurze Bolzen führt in vorteilhafter Weise zu eine signifikanten Vergrößerung des Abstandes zwischen den Sprengringnuten für seine Befestigung und den Ringnuten des Ringfeldes, so dass daraus resultierend größere Gewichtstaschen (Freiguss) möglich werden. Der Einsatz eines solche kurzen, gegenüber dem äußeren Durchmesser des Kolbens zurückgesetzten Bolzens wird in vorteilhafter Weise noch dadurch unterstützt, dass das Material der Gießschmelze und des Kolbenbolzens so gewählt werden, dass sich eine Flächenpressung von Bolzen und Bolzenbohrung von mindestens 80 Megapascal (Mpa), vorzugsweise mehr als 90 Megapascal (Mpa), im Betrieb des Kolbens im Zylinderraum der Brennkraftmaschine ergibt.

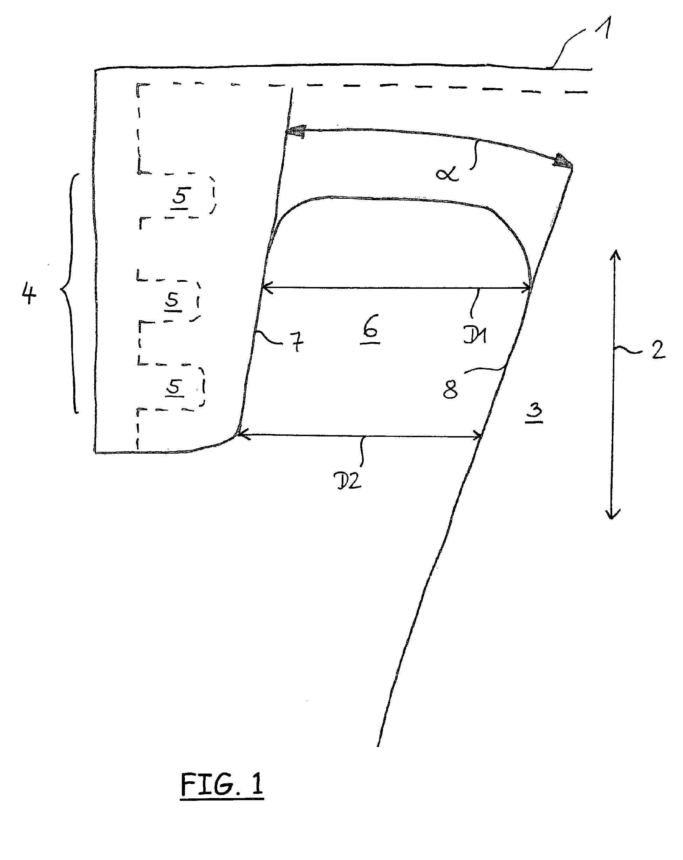

Zur Verdeutlichung der Erfindung hinsichtlich des Verfahrens zur Herstellung des Kolbens sowie der Konstruktion eines danach hergestellten Kolbens wird auf die Figuren 1 bis 3 verwiesen.

Figur 1 zeigt die grundsätzliche Ausgestaltung eines Kolbendesigns, wobei dieser Kolben nach dem erfindungsgemäßen Verfahren hergestellt worden ist. In üblicher und an sich bekannter Weise wird zunächst ein Kolbenrohling 1 dadurch hergestellt, dass eine Gießschmelze in eine Gießform gegeben und abgewartet wird, bis die Gießschmelze erstarrt ist, wobei danach der Kolbenrohling 1 der Gießform entnommen und fertig bearbeitet wird. In der Figur 1 sind die Außenmaße des Kolbenrohlings 1 in Form von durchgezogenen Linien dargestellt, wobei diese Abmessungen, insbesondere die äußeren Abmessungen wie Höhe beziehungsweise Außendurchmesser, auf Übermaß gegossen worden sind. Der in der Figur 1 ausschnittsweise dargestellte Kolbenrohling 1 weist mit Bezug auf eine Kolbenhubachse 2 einen teilweise dargestellten Kolbeninnenbereich 3 sowie ein außen radial umlaufendes Ringfeld 4 mit Ringnuten 5 auf. Zwischen dem Kolbeninnenbereich 3 und dem umlaufenden Ringfeld 4 ist wie weiter oben schon beschrieben, ein Freiguss 6 eingebracht, wobei in erfindungsgemäßer Weise der Freiguss 6 durch einen hier nicht dargestellten mehrteiligen Schieber der Gießform realisiert wird. Die negative Auszugsschräge ist beispielsweise dadurch definiert, dass ein (bei Betrachtung der Figur 1) oberer Abstand D1 zwischen den radial umlaufenden Außenwänden 7, 8, die den Freiguss 6 bilden, größer ist als ein unterer Abstand D2. Alternativ dazu kann die negative Auszugsschräge, die hier in erfindungsgemäßer Weise durch den mehrteiligen Schieber realisiert wird, dadurch definiert werden, dass die beiden Außenwände 7, 8 des Freigusses 6 in einem spitzen Winkel α, bezogen auf die Kolbenhubachse 2, angestellt sind, wie es in der Figur 1 dargestellt ist.

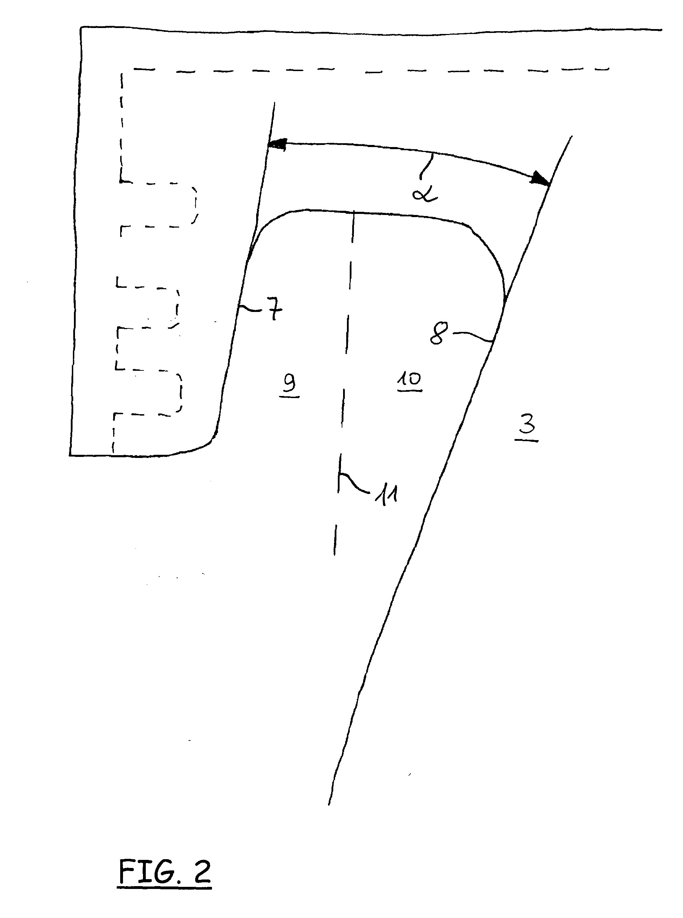

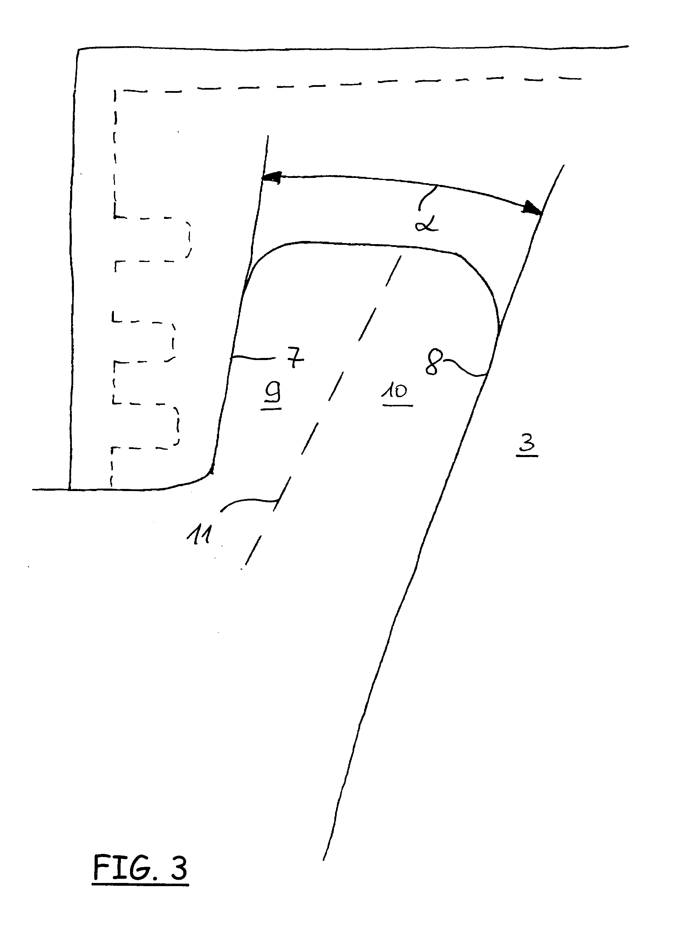

Bei dem Ausführungsbeispiel, welches prinzipiell in Figur 1 und auch in den Figuren 2 und 3 dargestellt ist, wird nach Herstellung des Kolbenrohlings 1 ein weiterer Bearbeitungsschritt durchgeführt, bei dem nämlich die äußeren Konturen des Kolbenrohlings 1 vorzugsweise durch Span abhebende Bearbeitung derart bearbeitet werden, dass der Kolbenrohling 1 auf Maß gebracht wird und somit der fertige Kolben entsteht. Diese Bearbeitung ist in Bezug auf das Ringfeld und den nach oben weisenden Kolbenboden in der Figur 1 dadurch dargestellt, dass der fertig bearbeitete Kolben mit seinen äußeren Konturen durch gestrichelte Linien dargestellt ist.

Der Vollständigkeit halber sei erwähnt, dass der Kolbenrohling 1 (beziehungsweise der fertige Kolben mit den gestrichelten Linien) in Figur 1 nur ausschnittsweise dargestellt ist, um die erfindungsgemäße Herstellungsweise eines solchen Kolbens sowie einen danach hergestellten Kolben zu erläutern. Selbstverständlich weist ein solcher Kolben auch die übrigen Konstruktionselemente wie Kolbenschäfte, Kolbennaben, Kolbenbohrungen, gegebenenfalls einen Kühlkanal und gegebenenfalls eine Brennraummulde auf, damit ein solcher fertiger Kolben in den Zylinderraum einer Brennkraftmaschine eingesetzt und dort in üblicher Form betrieben werden kann. Darüber hinaus ist zu erwähnen, dass es auf die Bauform des Kolbens nicht ankommst. So lässt sich das erfindungsgemäße Verfahren zur Herstellung eines Kolbens einer Brennkraftmaschine bei einteiligen Kolben anwenden, die in einer Gießform gegossen werden. Daneben ist es alternativ auch möglich, bei mehrteiligen, insbesondere Pendelschaftkolben den sogenannten Kolbenkopf mittels des mehrteiligen Schiebers (auch als mehrteiliges Werkzeug bezeichnet) mit einem Freiguss zu versehen, wobei der somit hergestellte Kolbenkopf über den Kolbenbolzen mit dem Unterteil verbunden wird.

In den Figuren 2 und 3 ist basierend auf der Konstruktion des Kolbens, wie sie in Figur 1 dargestellt ist, weiter dargestellt, dass der Freiguss 6 mit dem zwei- oder mehrteiligen Schieber hergestellt ist, wobei hierbei dargestellt ist, dass der Schieber zweiteilig ist und verschiedene Ebenen der Werkzeugteilung in Figur 2 beziehungsweise Figur 3 angegeben sind. Die Ausrichtung der Ebenen der Werkzeugteilung sind beispielsweise parallel zu der Kolbenhubachse 2 (Figur 2) oder in einem Winkel angestellt zu der Kolbenhubachse 2 (Figur 3).

In Bezug auf die Werkzeugteilung, wie sie in Figur 2 dargestellt ist, muss folglich zuerst das erste Schieberteil 9 aus dem fertigen Freiguss herausgezogen werden, bevor es möglich ist, durch eine schräg gerichtete Bewegung nach unten auch das weitere Schieberteil 10 aus dem Freiguss herauszubewegen.

In Figur 3 ist aufgrund der der anders ausgerichteten Werkzeugteilungsebene es möglich, dass zunächst das weitere Schieberteil 10 schräg nach unten ausgezogen wird, bevor es möglich ist, dass erste Schieberteil 9 aus dem Freiguss herauszubewegen.

Der Vollständigkeit halber sei erwähnt, dass in den Figuren 2 und 3 die Teilungsebenen der einzelnen Schieberteile in Bezug auf die Kolbenhubachse 2 ausgerichtet sind und folglich die einzelnen Schieberteile radial umlaufend ausgebildet sind. Daneben ist es selbstverständlich auch denkbar, eine oder mehrere Werkzeugteilungsebenen, zusätzlich zu den in den Figuren 2 und 3 gezeigten Werkzeugteilungsebenen, auch im radialen Verlauf der einzelnen Schieberteile vorzusehen.

### Bezugszeichenliste:

- 1.: Kolbenrohling
- 2.: Kolbenhubachse
- 3.: Kolbeninnenbereich
- 4.: Ringfeld
- 5.: Ringnuten
- 6.: Freiguss
- 7.: Aussenwand
- 8.: Aussenwand
- 9.: erstes Schieberteil
- 10.: weiteres Schieberteil
- 11.: Schieberteilungsebene

## Patentansprüche

1. Verfahren zur Herstellung eines Kolbens einer Brennkraftmaschine, wobei ein Kolbenrohling **dadurch** hergestellt wird, dass eine Gießschmelze in eine Gießform gegeben und abgewartet wird, bis die Gießschmelze erstarrt ist, wobei danach der Kolbenrohling (1) der Gießform entnommen und fertig bearbeitet wird, wobei weiterhin die Gießform zumindest die äußeren Konturen des Kolbens abbildende Gießformteile und einen den Innenbereich des Kolbens abbildendenden Gießkern aufweist, **dadurch gekennzeichnet, dass** die Gießform weiterhin zumindest einen zumindest zweiteiligen Schieber (9, 10) aufweist, der in den Kolbenrohling (1) einen Freiguss (6) hinter einem Ringfeld (4) des Kolbens bildet, wobei der Schieber derart eine negative Auszugsschräge aufweist, dass zunächst ein erster Teil des Schiebers (9) aus seiner beim Gießen eingenommenen Position herausbewegt wird und dadurch eine Herausbewegung des zumindest weiteren Teils des Schiebers (10) aus dessen beim Gießen eingenommenen Position freigegeben wird und dass die negative Auszugsschräge dadurch definiert ist, dass die beiden Außenwände (7, 8) des Freigusses (6) in einen spitzen Winkel α einschließen und bezogen auf die Kolbenhubachse (2) angestellt sind.

2. Verfahren nach Anspruch 1, **dadurch gekennzeichnet, dass** mit dem mehrteiligen Schieber (9, 10) ein radial abschnittsweiser Freiguss (6) hinter dem Ringfeld (4), oberhalb einer Bolzenbohrung des Kolbens erzeugt wird.

3. Verfahren nach einem der vorhergehenden Ansprüchen, **dadurch gekennzeichnet, dass** Hinterschnitte im Kolbenmaterial erzielt werden, die in solchen Bereichen liegen, die während des Betriebes des fertigen Kolbens im Zylinderraum der Brennkraftmaschine nicht oder nur schwach belastet sind.

4. Verfahren nach einem der vorhergehenden Ansprüche, **dadurch gekennzeichnet, dass** ein Teil eines Schiebers zunächst teilweise in die Soll-Position bzw. aus dieser herausbewegt wird.

5. Verfahren nach einem der vorhergehenden Ansprüche, **dadurch gekennzeichnet, dass** durch die Ausgestaltung der Gießform die Bolzennaben gegenüber dem äußeren Durchmesser des Kolbens zurückgesetzt sind und ein kurzer Bolzen in die Bolzenbohrungen in den Bolzennaben eingesetzt wird.

## Claims

1. Method for producing a piston of an internal combustion engine, a piston blank being produced by introducing a casting melt into a casting mould and waiting until the casting melt has solidified, the piston blank (1) then being removed from the casting mould and finished, the casting mould having furthermore casting mould parts that replicate at least the outer contours of the piston and a casting core that replicates the inner region of the piston, **characterized in that** the casting mould has furthermore at least one slide (9, 10) comprising at least two parts, which forms a free casting (6) in the piston blank (1) behind an annular area (4) of the piston, the slide having a negative pullout bevel in such a way that initially a first part of the slide (9) is moved out of its position assumed during casting and, as a result, movement of the at least one further part of the slide (10) out of its position assumed during casting is enabled, and **in that** the negative pullout bevel is defined by the two outer walls (7, 8) of the free casting (6) forming an acute angle α and being set with respect to the piston reciprocating axis (2).

2. Method according to Claim 1, **characterized in that** with the multi-part slide (9, 10) a radially segmental free casting (6) is produced behind the annular area (4), above a pin bore of the piston.

3. Method according to one of the preceding claims, **characterized in that** undercuts are achieved in the piston material, lying in those regions that are not subjected to loading, or only to weak loading, during the operation of the finished piston in the cylinder chamber of the internal combustion engine.

4. Method according to one of the preceding claims, **characterized in that** one part of a slide is initially moved partly into the target position or partly out of the target position.

5. Method according to one of the preceding claims, **characterized in that**, by way of the configuration of the casting mould, the pin hubs are set back with respect to the outer diameter of the piston and a short pin is inserted into the pin bores in the pin hubs.

## Revendications

1. Procédé de fabrication d'un piston d'un moteur à combustion interne, dans lequel on fabrique une ébauche de piston en versant une masse fondue dans un moule de coulée et en attendant jusqu'à ce que la masse fondue soit solidifiée, dans lequel on retire ensuite l'ébauche de piston (1) hors du moule de coulée et on effectue un usinage de finition, dans lequel le moule de coulée présente en outre au moins des parties de moule de coulée formant les contours extérieurs du piston et un noyau de coulée formant la région intérieure du piston, **caractérisé en ce que** le moule de coulée présente en outre au moins une coulisse (9, 10) en au moins deux parties, qui forme dans l'ébauche de piston (1) un creux de moulage (6) derrière un champ des segments (4) du piston, dans lequel la coulisse présente une inclinaison d'extraction négative, de telle manière que l'on retire d'abord une première partie de la coulisse (9) à partir de sa position occupée pendant la coulée et qu'on libère ainsi un mouvement d'extraction de ladite au moins une autre partie de la coulisse (10) à partir de sa position occupée pendant la coulée, et **en ce que** l'inclinaison d'extraction négative est définie par le fait que les deux parois extérieures (7, 8) du creux de moulage (6) forment un angle aigu α et sont inclinées par rapport à l'axe de course (2) du piston.

2. Procédé selon la revendication 1, **caractérisé en ce que** l'on produit avec la coulisse en plusieurs parties (9, 10) un creux de moulage (6) radialement partiel derrière le champ des segments (4), au-dessus d'un alésage de pivot du piston.

3. Procédé selon l'une quelconque des revendications précédentes, **caractérisé en ce que** l'on réalise des contre-dépouilles dans la matière du piston, qui sont situées dans des régions qui ne sont pas ou qui ne sont que faiblement sollicitées pendant le fonctionnement du piston terminé dans la chambre des cylindres du moteur à combustion interne.

4. Procédé selon l'une quelconque des revendications précédentes, **caractérisé en ce qu'**une partie d'une coulisse est d'abord introduite partiellement dans la position théorique ou est retirée de celle-ci.

5. Procédé selon l'une quelconque des revendications précédentes, **caractérisé en ce que**, par la configuration du moule de coulée, les moyeux de pivot sont en retrait par rapport au diamètre extérieur du piston et un pivot court est introduit dans les alésages de pivot dans les moyeux de pivot.
